# FASCICULE DE BREVET EUROPEEN

(11) **EP 4 116 165 B1**
(45) Date de publication et mention de la délivrance du brevet: **04.06.2025**
(21) Numéro de dépôt: 22182934.4
(22) Date de dépôt: 05.07.2022
(51) Int. Cl.: B61D 3/10

(54) **CHAÎNE DE VÉHICULES SEMI-REMORQUES ET RAME ARTICULÉE ASSOCIÉE**
KETTE VON SATTELSCHLEPPERFAHRZEUGEN UND ENTSPRECHENDE GELENKZUGGARNITUR
CHAIN OF SEMI-TRAILER VEHICLES AND ASSOCIATED ARTICULATED TRAIN

(30) Priorité: 05.07.2021 FR 2107248
(43) Date de publication de la demande: 11.01.2023
(73) Titulaire: ALSTOM Holdings, 93400 Saint-Ouen-sur-Seine (FR)
(72) Inventeur: SANCHEZ RODRIGUEZ, Carlos, 75017 Paris (FR); COSTES, Cyril, 71390 Buxy (FR); COTTIN, Fabrice, 71390 Buxy (FR); TEODORO, Juan Manuel, 75116 Paris (FR)
(74) Mandataire: Lavoix

(56) Documents cités:
- EP-A1- 0 347 334
- EP-A1- 1 630 057
- EP-A1- 1 674 367
- EP-A1- 1 721 803
- DE-A1- 10 144 604

## Description

La présente invention concerne une chaîne de véhicules semi-remorques. La présente invention porte aussi sur une rame articulée associée.

Dans le domaine ferroviaire, différentes configurations de rames articulées ont été développées.

EP 1 630 057 présente une rame articulée de chemin de fer comprenant une chaîne de véhicules semi-remorques.

Une configuration connue est la rame articulée à bogie Jacob. Dans cette configuration, les bogies Jacob sont placés entre deux caisses de sorte que les voitures correspondantes répartissent leur poids sur la moitié de chaque bogie. L'axe de pivotement de chaque bogie Jacob coïncide avec l'axe d'articulation inter-caisse.

Néanmoins, pour accueillir quatre suspensions secondaires, les bogies Jacob présentent un empattement (distance entre les essieux de ce bogie) augmenté par rapport aux bogies conventionnels, ce qui diminue leur aptitude à passer dans des courbes serrées. En outre, les bogies Jacob sont généralement plus difficiles à motoriser compte-tenu des contraintes d'intégration et d'encombrement dans les zones d'intercirculation en dessous desquelles sont disposées les bogies Jacob. Enfin, les bogies Jacob présentent l'inconvénient d'être plus onéreux que les bogies conventionnels du fait des équipements doublés, notamment quatre suspensions, deux dispositifs antiroulis (un pour chaque caisse), éventuellement quatre amortisseurs verticaux et des systèmes de relevage s'accommodant aux deux caisses.

Une autre configuration connue utilise seulement des bogies conventionnels à deux suspensions secondaires. Dans cette configuration, un bogie conventionnel est disposé sous la zone d'intercirculation de sorte qu'une seule extrémité de caisse, dite extrémité porteuse, repose sur le bogie. La caisse adjacente, c'est-à-dire l'extrémité portée, repose sur la première caisse via une articulation inter-caisse à axe vertical. L'axe bogie (axe pivot) et l'axe d'articulation inter-caisse sont confondus. Pour ce faire, l'extrémité porteuse a ses appuis de suspension en porte à faux par rapport à la structure principale.

Toutefois, une telle configuration complexifie fortement l'extrémité de caisse, ce qui engendre des coûts conséquents.

Il existe donc un besoin pour une configuration de véhicules articulés aptes à passer dans des courbes serrées qui soit plus simple à mettre en œuvre.

A cet effet, la présente description a pour objet une rame articulée de chemin de fer conforme à la revendication 1.

Suivant des modes de réalisation particuliers, la rame articulée est conforme à l'une des revendications 2 à 8.

D'autres caractéristiques et avantages de l'invention apparaîtront à la lecture de la description qui suit de modes de réalisation de l'invention, donnés à titre d'exemple uniquement et en référence aux dessins qui sont :
[Fig 1], Figure 1, une représentation schématique d'un exemple d'une rame articulée de chemin de fer comprenant un véhicule principal interconnecté à une chaîne de véhicules semi-remorques, la rame étant visible de côté sur la représentation du haut et de dessous sur la représentation du bas,
[Fig 2], Figure 2, une représentation schématique d'un exemple de deux caisses articulées l'une à l'autre par une articulation inter-caisse,
[Fig 3], Figure 3, une représentation schématique d'un exemple d'une articulation inter-caisse,
[Fig 4], Figure 4, une représentation schématique d'un autre exemple d'une rame articulée de chemin de fer comprenant un véhicule principal interconnecté à une chaîne de véhicules semi-remorques, seul le véhicule principal différant de l'exemple de la figure 1,
[Fig 5], Figure 5, une représentation schématique d'un exemple d'un premier bogie d'un véhicule principal, le premier bogie définissant un seul point d'appui au moins lorsque les suspensions pneumatiques latérales dudit bogie sont dysfonctionnelles, et
[Fig 6], Figure 6, une représentation schématique du premier bogie de la figure 5 vue en coupe selon un axe longitudinal, dit axe longitudinal central.

Dans la description, le terme « longitudinal » est défini par rapport à la direction selon laquelle circule le véhicule, c'est-à-dire la direction dans laquelle s'étendent les rails sur lesquels ce véhicule circule. La direction longitudinale est représentée sur les figures par un axe X. Le terme « transversal » est défini par rapport à une direction sensiblement perpendiculaire à la direction longitudinale dans un plan horizontal, c'est-à-dire la direction selon laquelle les rails sont écartés l'un de l'autre. La direction transversale est représentée sur les figures par un axe Y. La direction perpendiculaire à la direction longitudinale et à la direction transversale est appelée « direction verticale » et est représentée sur les figures par un axe Z. Les termes « avant » et « arrière » sont définis par rapport à la direction de roulement du véhicule ferroviaire.

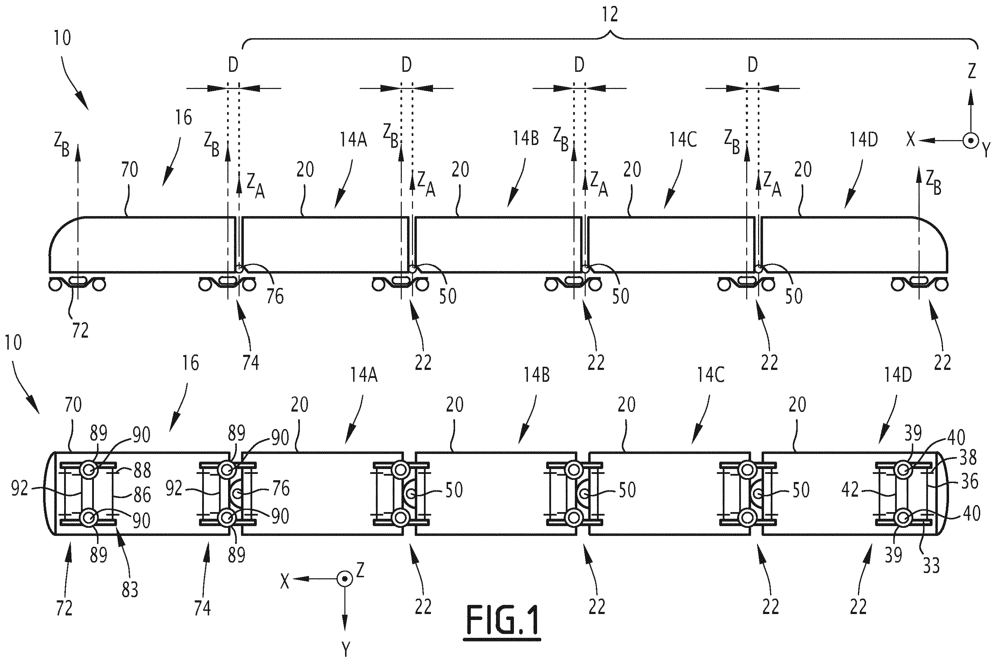

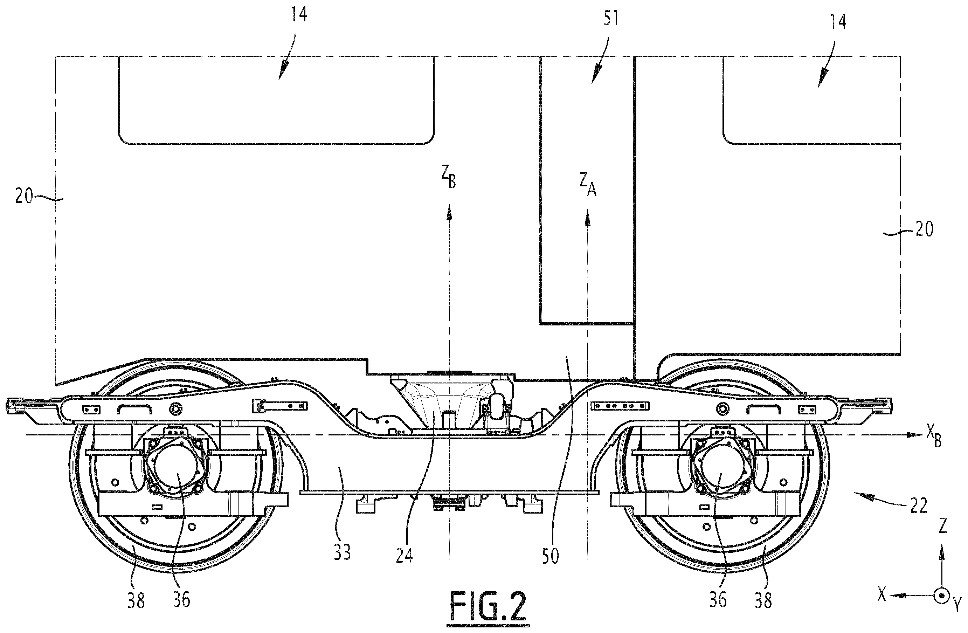

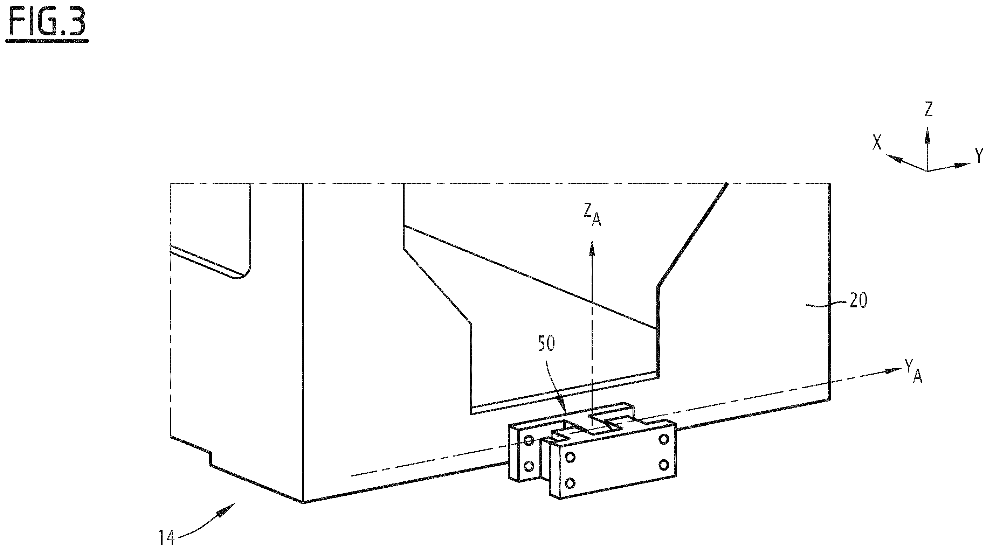

Un premier mode de réalisation d'une rame 10 articulée de chemin de fer est illustrée par la figure 1 avec des détails donnés à titre d'exemple sur les figures 2 et 3. La rame 10 articulée de chemin de fer est, par exemple, un train, un métro, un tramway, ou plus généralement tout autre type de structures roulantes.

Dans cet exemple, la rame articulée 10 comprend une chaîne 12 de véhicules semi-remorques 14, articulée à un véhicule principal 16.

En variante, la rame articulée 10 comprend une ou plusieurs autres chaînes 12 de véhicules semi-remorques 14, articulée(s) sur le véhicule principal 16 (autre extrémité) ou sur un autre véhicule principal 16 par exemple.

Chaque chaîne 12 de véhicules semi-remorques 14 comprend au moins un véhicule semi-remorque 14. Dans l'exemple illustré par la figure 1, la chaîne 12 comprend quatre véhicules semi-remorques 14A, 14B, 14C et 14D.

Un véhicule d'extrémité de la chaîne 12, dit premier véhicule semi-remorque, est articulé au véhicule principal 16. Les autres véhicules semi-remorques 14 de la chaîne 12 sont ensuite articulés les uns aux autres à partir du premier véhicule. Dans l'exemple de la figure 1, le premier véhicule est le véhicule 14A.

Chaque véhicule semi-remorque 14 comprend une caisse 20 et un unique bogie de support de la caisse 20, dit bogie remorque 22.

Chaque bogie remorque 22 est ou non motorisé.

Chaque bogie remorque 22 présente un pivot central 24 définissant un axe vertical de pivotement, dit axe bogie Z_{B}. Chaque bogie remorque 22 est articulé par rapport à la caisse 20 correspondante selon l'axe bogie Z_{B}. Le pivot central 24 permet aussi de définir un axe longitudinal central X_{B}, l'axe longitudinal central X_{B} étant selon la direction longitudinale X et passant par le pivot central 24.

Chaque bogie remorque 22 comprend, par exemple, un châssis 33, deux essieux 36 ayant chacun deux roues 38 (seule une référence 36 et 38 sont représentées sur la figure 1 pour ne pas surcharger la figure) et deux suspensions secondaires 39. Chaque suspension secondaire 39 est, de préférence, associée à une suspension de secours 40. Chaque bogie remorque 22 comprend également un système antiroulis 42. Les suspensions secondaires 39, de secours 40 et le système antiroulis 42 sont seulement représentés sur la voiture 14D de la figure 1 pour ne pas surcharger la figure.

Une suspension secondaire désigne une suspension pneumatique entre le châssis d'un bogie et la caisse du véhicule supportée par le bogie. Une suspension de secours désigne une suspension pneumatique propre à remplacer une suspension secondaire lorsque ladite suspension secondaire est défectueuse (suspension dégonflée ou crevée par exemple).

Les suspensions secondaires 39 sont les seules suspensions secondaires d'un bogie remorque 22. Les suspensions secondaires 39 sont des suspensions latérales, c'est-à-dire situées de part et d'autre de l'axe longitudinal central X_{B}.

Les suspensions secondaires 39 comprennent, par exemple, au moins un ressort pneumatique.

Les suspensions de secours 40 comprennent, par exemple, un pied de secours, tel qu'un pied en caoutchouc et en métal.

Le système antiroulis 42 est, par exemple, formé d'une ou plusieurs barres antiroulis. En l'occurrence, dans l'exemple de la figure 1, le système antiroulis 42 des bogies remorques 22 comprend une barre antiroulis.

Chaque bogie remorque 22 connecté à un véhicule suivant de la rame 10 comprend aussi une articulation inter-caisse 50. L'articulation inter-caisse 50 est portée à l'extrémité de la caisse 20 du véhicule correspondant. Un exemple d'une telle articulation inter-caisse 50 est visible notamment sur les figures 1 à 3.

Dans l'exemple illustré par la figure 1, seul le véhicule semi-remorque 14D, non connecté à un véhicule suivant, ne comprend pas d'articulation inter-caisse 50. Toutefois, dans une variante, tous les véhicules semi-remorques 14, mêmes ceux non connectés à un véhicule suivant, comprennent une articulation inter-caisse 50.

De préférence, comme illustré par la figure 3, l'articulation inter-caisse 50 est en vis-à-vis de la zone d'intercirculation 51 entre les deux véhicules articulés.

Chaque articulation inter-caisse 50 est articulée selon un axe de pivotement horizontal Y_{A} et un axe de pivotement vertical Z_{A}. L'articulation selon l'axe de pivotement horizontal Y_{A} permet le passage dans les creux et bosses. L'articulation selon l'axe de pivotement vertical Z_{A} permet le passage dans les courbes.

L'un de l'axe de pivotement horizontal Y_{A} et de l'axe de pivotement vertical Z_{A} est un axe de révolution principal pour l'articulation inter-caisse 50 de sorte que :
- l'application d'un couple autour de l'axe de révolution principal provoque une déformation élastique angulaire en torsion (dans le référentiel de l'articulation) matérialisée par un angle de torsion, et
- l'application d'un couple d'axe perpendiculaire à l'axe de révolution principal provoque une déformation élastique angulaire en conique (dans le référentiel de l'articulation) matérialisée par un angle conique.

De préférence, l'axe de révolution principal de l'articulation inter-caisse 50 est l'axe de pivotement horizontal Y_{A}. Ainsi, l'articulation inter-caisse 50 est articulée en torsion selon l'axe de pivotement horizontal Y_{A} et en conique selon l'axe de pivotement vertical Z_{A}. Dans ce cas, l'articulation inter-caisse 50 est, par exemple, une rotule à axe transversal. La rotule est, par exemple, en caoutchouc et en métal. Le fait que l'axe de révolution principal soit selon la direction transversale Y permet de simplifier les extrémités de caisse par rapport à une articulation dont l'axe de révolution principal est selon la direction d'élévation Z et pour laquelle l'une des extrémités de la caisse porteuse est en porte à faux par rapport à la structure principale.

La figure 3 illustre un exemple d'articulation inter-caisse 50 articulée en torsion selon un axe transversal Y_{A} (axe de révolution principal).

Chaque bogie remorque 22 d'une caisse 20 portant une articulation inter-caisse 50 est disposé longitudinalement par rapport à la caisse 20 de sorte que l'axe bogie Z_{B} et l'axe de pivotement vertical Z_{A} sont désaxés d'une distance D.

De préférence, la distance D est inférieure ou égale au demi-empattement du bogie remorque 22. L'empattement est la distance entre les essieux d'un bogie. Le demi-empattement est donc la distance entre l'axe pivot bogie et un essieu. Ainsi, l'articulation inter-caisse 50 est disposée entre l'axe pivot bogie et l'essieu. L'essieu est, par exemple, disposé à une distance comprise entre 1 mètre et 1,5 mètres de l'axe bogie (donc l'articulation est comprise entre 0 et 1 à 1,5 mètres de l'axe bogie.

Avantageusement, la distance D est inférieure ou égale à 450 millimètres afin de limiter le porte-à-faux.

De préférence, chaque bogie remorque 22 d'une caisse 20 portant une articulation inter-caisse 50 est au moins en partie en vis-à-vis de ladite articulation inter-caisse 50.

Ainsi, chaque véhicule semi-remorque 14 comprend seulement trois points d'appui, à savoir :
- un premier point d'appui formé par l'articulation du véhicule précédent sur lequel est articulé le véhicule semi-remorque 14, et
- un deuxième et un troisième point d'appui, chacun formé par les suspensions secondaires 39 du bogie remorque 22 portant la caisse 20 du véhicule ou les suspensions de secours 40 lorsque les suspensions secondaires 39 sont défectueuses.

Le véhicule principal 16 comprend une caisse 70, deux bogies de support de la caisse 70, dit bogies principaux 72, 74, et au moins une articulation inter-caisse, dite articulation inter-caisse 76, portée par la caisse 70.

Chaque bogie principal 72, 74 est ou non motorisé.

Chaque bogie principal 72, 74 présente un pivot central 80 définissant un axe vertical de pivotement, dit axe bogie Z_{B}. Chaque bogie principal 72, 74 est articulé par rapport à la caisse 70 correspondante selon l'axe bogie Z_{B}. Le pivot central 80 permet aussi de définir un axe longitudinal central X_{B}, l'axe longitudinal central X_{B} étant selon la direction longitudinale X et passant par le pivot central 80.

Dans un exemple de configuration, telle qu'illustrée par la figure 1, chaque bogie principal 72, 74 comprend, par exemple, un châssis 83, deux essieux 86 ayant chacun deux roues 88 (seule une référence 83, 86 et 88 sont représentées sur la figure 1 pour ne pas surcharger la figure) et deux suspensions secondaires 89. Chaque suspension secondaire 89 est, de préférence, associée à une suspension de secours 90. Chaque bogie principal 72, 74 comprend également un système antiroulis 92.

Dans l'exemple illustré par la figure 1, les bogies principaux 72, 74 sont identiques, et le véhicule principal 16 est en appui sur quatre points d'appui.

Les suspensions secondaires 89, de secours 90 et le système antiroulis 92 sont par exemple identiques aux éléments correspondants des bogies remorques 22. Plus généralement, les bogies principaux 72, 74 sont par exemple identiques aux bogies remorques 22.

L'articulation inter-caisse 76 permet l'articulation du premier véhicule 14 de la chaîne 12 de véhicules semi-remorques 14 sur le véhicule principal 16.

L'articulation inter-caisse 76 du véhicule principale 76 est de préférence identique aux articulations inter-caisse 50 des véhicules semi-remorques 14.

L'un des bogies principaux, à savoir le bogie principal 74 (le plus proche longitudinalement de l'articulation inter-caisse 76), est disposé longitudinalement par rapport à la caisse 70 de sorte que l'axe bogie Z_{B} et l'axe de pivotement vertical Z_{A} correspondants sont désaxés. Le désaxage est avantageusement identique au désaxage correspondant des axes des bogies remorques 22 et articulations inter-caisse 50 (mêmes conditions sur la distance D notamment).

Lors du fonctionnement de la rame 10 illustrée par les figures 1 à 3, le véhicule principal 16 est supporté par deux bogies 72, 74 et chaque véhicule semi-remorque 14 est supporté par un unique bogie remorque 22.

Chaque véhicule semi-remorque 14 est en appui sur trois points d'appui, ce qui permet de faciliter le passage sur des voies présentant des défauts, tels que des gauches de voie. Un gauche de voie désigne une distorsion plane permettant de passer d'une portion de voie installée à plat à une portion de voie installée en devers (différence de hauteur entre deux rails d'une même voie en vis-à-vis l'un de l'autre). Le véhicule principal 16 est par contre en appui quatre points.

Ainsi, une telle configuration de rame articulée 10 est simple à mettre en œuvre, dans la mesure où les bogies remorques 22 et principaux 72, 74 sont, par exemple, des bogies conventionnels. En outre, la motorisation est insérable sur n'importe quel bogie.

En outre, le désaxage de l'axe bogie Z_{B} et de l'axe de pivotement vertical Z_{A} permet de grandement faciliter la fabrication des extrémités de caisse par rapport à l'architecture de l'état de la technique comprenant des extrémités portées et porteuses. Notamment, cela permet l'utilisation d'articulation inter-caisse ayant un axe de révolution principal dans la direction transversale Y.

Le véhicule principal 16 est positionnable à n'importe quel endroit de la rame. Toutefois, un positionnement en tête de rame permet de faciliter la fabrication de la rame.

La présente configuration est donc simple à mettre en œuvre et permet d'obtenir des véhicules aptes à passer dans des courbes serrées et motorisables.

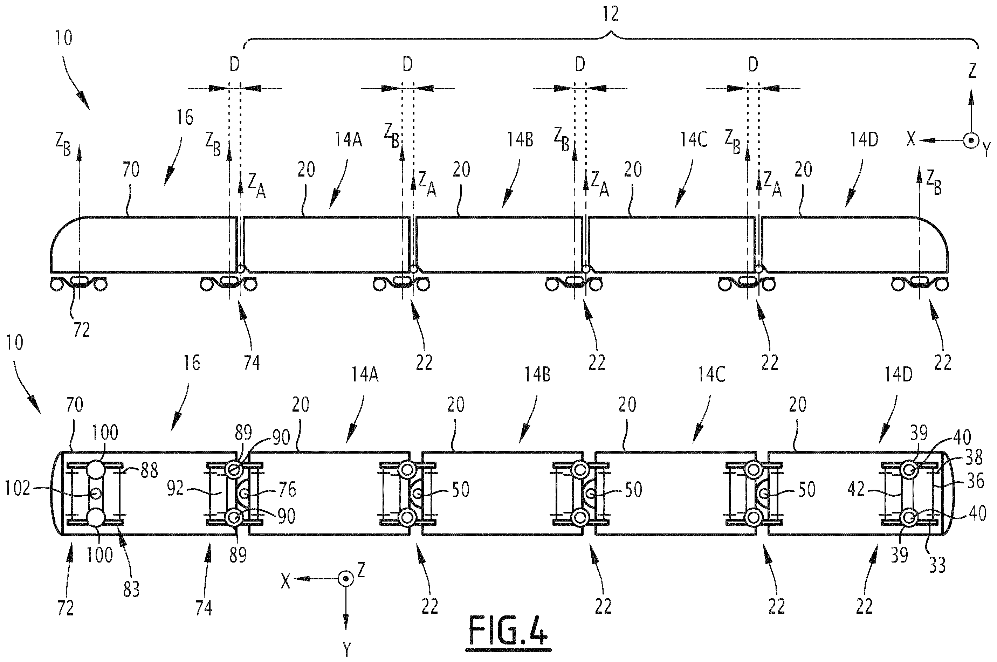

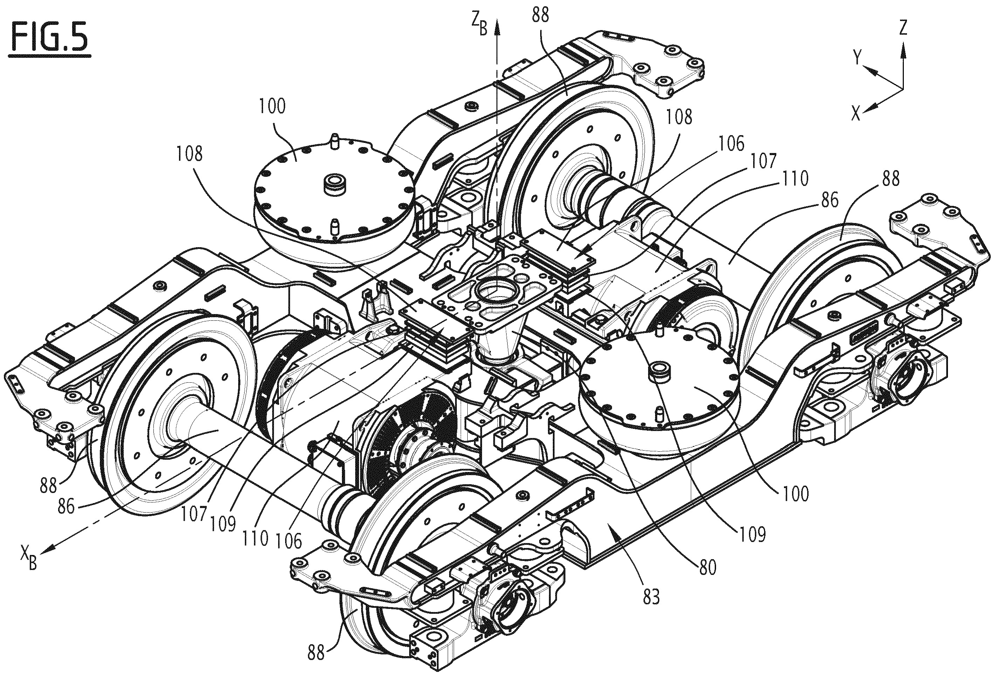

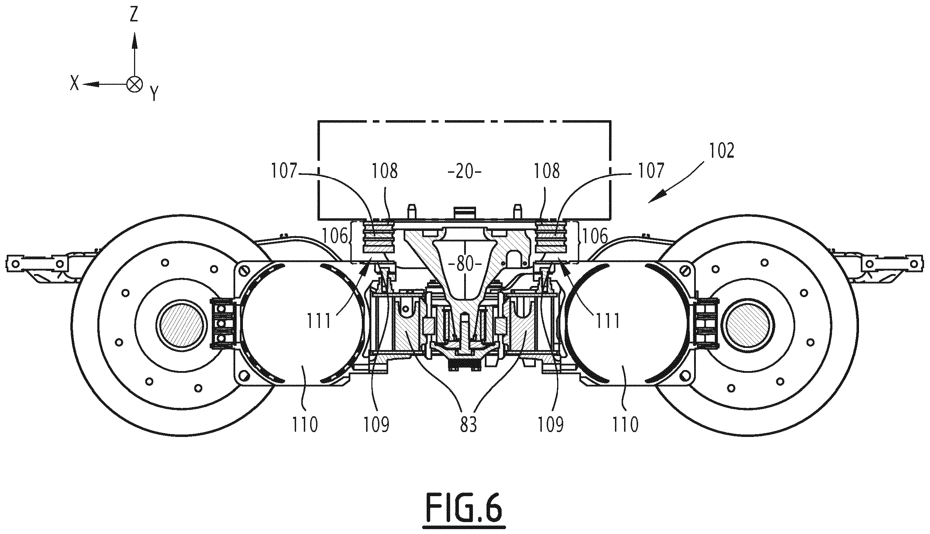

Un deuxième mode de réalisation d'une rame 10 articulée de chemin de fer est illustrée par la figure 4 avec des détails donnés à titre d'exemple en figures 5 et 6.

La rame articulée 10 du deuxième mode de réalisation est identique à celle du premier mode de réalisation, à la différence que le premier bogie 72 du véhicule principal 16 présente une structure différente de celle du premier bogie 72 du premier mode de réalisation. Seules les caractéristiques spécifiques du premier bogie 72 du second mode de réalisation sont décrites dans ce qui suit.

Le premier bogie 72 comprend deux premières suspensions secondaires 100 et une unique suspension centrale de secours 102 (la seule suspension de secours du premier bogie 72).

Les premières suspensions secondaires 100 sont des suspensions pneumatiques.

De préférence, les suspensions secondaires 100 sont disposées latéralement de part et d'autre de la suspension centrale de secours 102. De préférence, la suspension centrale de secours 102 est disposée sur le châssis 83 sur l'axe longitudinal central X_{B}, ce qui permet une meilleure répartition du poids du véhicule sur le premier bogie 72.

Dans un mode de réalisation, tel qu'illustré en figures 5 et 6, la suspension centrale de secours 102 comprend deux éléments de secours 106 disposés sur l'axe longitudinal central X_{B} de part et d'autre du pivot central 80.

Dans l'exemple illustré par les figures 5 et 6, chaque élément de secours 106 comprend un organe élastique 107, une platine de fixation 108 et un élément d'appui 109.

L'organe élastique 107 a une fonction de ressort. L'organe élastique 107 est propre à être fixé, via la platine de fixation 108, soit à la caisse 20 (comme illustré par la figure 4), soit au bogie.

L'élément d'appui 109 est fixé du côté opposé à l'organe élastique 107, c'est-à-dire est fixé sur le premier bogie 72 lorsque l'organe élastique 107 est fixé sur la caisse 20 (comme illustré par la figure 4) ou est fixé sur la caisse 20 lorsque l'organe élastique 107 est fixé sur le premier bogie 72. Lorsque l'élément d'appui 109 est fixé sur le bogie, il est par exemple fixé directement sur le châssis 83 ou sur tout élément lui-même fixé au châssis 83. Par exemple, lorsque le premier bogie 72 est un bogie moteur comme cela est le cas sur les figures 5 et 6, l'élément d'appui 109 est fixé sur le moteur 110 qui est lui-même fixé sur le châssis 83.

L'élément d'appui 109 est, de préférence, réalisé dans un matériau choisi pour réduire le coefficient de frottement et présenter des bonnes propriétés anti-usure. Le matériau de l'élément d'appui 109 est, par exemple, un métal revêtu téflon ^{®} ou un polymère type nylon, comme l'ertalon ^{®}.

Un jeu de fonctionnement 111 est présent entre l'organe élastique 107 et l'élément d'appui 109, ce qui permet à la suspension pneumatique secondaire 100 correspondante d'être la seule en fonctionnement lorsque cette suspension pneumatique secondaire 100 est gonflée (mode normal). En cas d'avarie (mode dégradé), la suspension pneumatique secondaire 100 n'est plus active et le jeu de fonctionnement 111 entre l'organe élastique 107 et l'élément d'appui 109 est comblé de sorte que l'élément de secours 106 remplace ladite suspension pneumatique secondaire 100.

Bien que l'exemple des figures 5 et 6 décrive une suspension centrale de secours 102 à deux éléments de secours 106, dans une variante, seul un élément de secours 106 est présent. Un tel élément de secours 106 est, par exemple, disposé en amont ou en aval du pivot central 80 sur l'axe longitudinal central X_{B}. Une disposition à deux éléments de secours 106 présente néanmoins l'avantage d'être plus stable par rapport à une disposition à un seul élément de secours 106, et de répartir les efforts sur une surface d'appui doublée.

Dans une autre variante, la suspension centrale de secours 102 comprend un nombre d'éléments de secours 106 strictement supérieur à deux. Dans ce cas, les éléments de secours 106 sont agencés autour du pivot central 80 de sorte à ne former qu'un seul point d'appui.

Dans un autre mode de réalisation, la suspension centrale de secours 102 comprend une suspension en forme de disque évidé. Le disque évidé est fixé sur le pivot central 80, c'est-à-dire que le pivot central 80 traverse le trou du disque évidé. De préférence, le disque évidé est réalisé au moins en partie en matériau élastomère. La configuration précédente avec les organes 106 est néanmoins plus facile d'accès dans le cas d'opérations de maintenance, du fait que les organes 106 sont disposés de part et d'autre du pivot central 80, et ne sont pas insérés sur le pivot central 80.

Avantageusement, le premier bogie 72 est dépourvu de système antiroulis.

Ainsi, dans cette configuration, le premier bogie 72 définit seulement un point d'appui (la suspension centrale de secours 102) lorsqu'au moins les suspensions secondaires 100 sont dysfonctionnelles. Ainsi, le premier bogie 72 et le second bogie 74 définissent trois points d'appui pour la caisse 70 du véhicule principal 16 lorsqu'au moins les suspensions secondaires 100 sont dysfonctionnelles.

Avantageusement, les suspensions secondaires 100 du premier bogie 72 sont pneumatiquement reliées l'une à l'autre, par exemple, par un tuyau ou un tube pneumatique. Les suspensions secondaires 100 ont donc sensiblement la même pression d'air en condition de fonctionnement normal. Dans ce cas, le premier bogie 72 et le second bogie 74 définissent aussi seulement trois points d'appui pour la caisse 70 du véhicule principal 16 lorsque les suspensions secondaires 100 sont fonctionnelles.

Les suspensions secondaires 100 sont par exemple alimentées via un composant de régulation. Le composant de régulation est propre à réguler la pression d'air dans les suspensions secondaires 100, notamment en fonction de la charge de la caisse 70 supportée par le premier bogie 72. Un tel composant de régulation permet le gonflage (injection d'air depuis un compresseur d'air) ou le dégonflage (mise à l'échappement vers l'extérieur - air ambiant).

De préférence, le composant de régulation est disposé sur ou dans le châssis 83 sur l'axe longitudinal central X_{B}.

Le composant de régulation est, par exemple, une valve de nivellement. La valve de nivellement est, par exemple, à actionnement mécanique.

Dans un autre exemple, le composant de régulation est une électrovalve. L'électrovalve est, par exemple, commandée par un capteur de position mesurant la distance entre le premier bogie 72 et la caisse 70. Ainsi, outre les avantages conférés par le premier mode de réalisation, le second mode de réalisation permet que le support de la caisse 70 du véhicule principal 16 se fasse par trois points d'appui au moins en fonctionnement de secours, et avantageusement aussi en fonctionnement normal. Une telle configuration à trois points d'appui est dite isostatique. Un support à trois points d'appui est particulièrement adapté pour une circulation sur des voies présentant des défauts géométriques, notamment des gauches de voie, longs ou courts, ce qui améliore la sécurité du véhicule. En particulier, avec une telle configuration, les effets de torsions de caisses et de déchargement de roues sont réduits.

En outre, lorsque le premier bogie 72 est dépourvu de système antiroulis, la caisse 70 est tenue en roulis seulement par le second bogie 74, ce qui limite les torsions de la caisse 70 et facilite le passage sur des voies présentant des défauts géométriques.

L'homme du métier comprendra que les modes de réalisation et variantes précédemment décrits peuvent être combinés pour former de nouveaux modes de réalisation pourvu qu'ils soient compatibles techniquement et couverts par les revendications ci-jointes.

## Revendications

1. Rame articulée de chemin de fer (10) comprenant :
a. un véhicule principal (16) comprenant une caisse (70), deux bogies de support de la caisse (70), dit bogies principaux (72, 74), et une articulation inter-caisse (76) portée par la caisse (70), et
b. au moins une chaîne (12) de véhicules semi-remorques (14), destinée à être articulée à un véhicule principal (16), chaque véhicule semi-remorque (14) comprenant une caisse (20) et un unique bogie de support de la caisse (20), dit bogie remorque (22), chaque bogie remorque (22) étant articulé par rapport à la caisse (20) correspondante selon un axe vertical de pivotement, dit axe bogie (Z_{B}), l'un des véhicules d'extrémité de la chaîne (12), dit premier véhicule semi-remorque (14A), étant destiné à être articulé au véhicule principal (16), les caisses (20) des véhicules semi-remorques (14) étant articulées successivement les unes aux autres à partir du premier véhicule semi-remorque (14A) de la chaîne (12) par une articulation inter-caisse (50) distincte, chaque articulation inter-caisse (50) étant portée par une extrémité de chaque véhicule semi-remorque (14) connecté à un véhicule suivant, chaque articulation inter-caisse (50) étant articulée selon un axe de pivotement vertical (Z_{A}), chaque bogie remorque (22) d'une caisse (20) portant une articulation inter-caisse (50) étant disposé longitudinalement par rapport à la caisse (20) de sorte que l'axe bogie (Z_{B}) et l'axe d'interconnexion (Z_{A}) sont désaxés, le premier véhicule (14A) de la chaîne (12) étant articulé à la caisse (70) du véhicule principal (16) par l'articulation inter-caisse (76) du véhicule principal (16),
la rame articulée de chemin de fer (10) étant **caractérisée en ce que** l'un des bogies principaux, dit premier bogie (72), comprend deux suspensions secondaires (100) et une unique suspension centrale de secours (102), l'autre bogie principal, dit second bogie (74), comprenant deux suspensions secondaires (89) et une suspension de secours (90) propre à chaque suspension secondaire (89), le premier bogie (72) et le second bogie (74) définissant seulement trois points d'appui pour la caisse (70) du véhicule principal (16) lorsque les suspensions secondaires (100) du premier bogie (72) sont dysfonctionnelles.

2. Rame articulée de chemin de fer (10) selon la revendication 1, dans laquelle l'axe bogie (Z_{B}) et l'axe d'interconnexion (Z_{A}) correspondant sont désaxés d'une distance D, la distance D étant inférieure ou égale à la moitié de la distance entre les essieux du bogie correspondant, de préférence inférieure ou égale à 1500 millimètres, avantageusement inférieure ou égale à 450 millimètres.

3. Rame articulée de chemin de fer (10) selon la revendication 1 ou 2, dans laquelle chaque articulation inter-caisse (50) est aussi articulée selon un axe de pivotement horizontal (Y_{A}), l'articulation inter-caisse (50) étant articulée en torsion selon l'axe de pivotement horizontal (Y_{A}) et en conique selon l'axe de pivotement vertical (Z_{A}).

4. Rame articulée de chemin de fer (10) selon l'une quelconque des revendications 1 à 3, dans laquelle chaque articulation inter-caisse est une rotule à axe transversal, telle qu'une rotule en caoutchouc et en métal.

5. Rame articulée (10) selon l'une quelconque des revendications 1 à 4, dans laquelle chaque bogie principal (72, 74) est articulé par rapport à la caisse (70) du véhicule principal (16) selon un axe vertical de pivotement, dit axe bogie (Z_{B}), l'articulation inter-caisse (76) du véhicule principal (16) étant articulée selon un axe de pivotement vertical (Z_{A}), l'un des bogies principaux (74) étant disposé longitudinalement par rapport à la caisse (70) du véhicule principal (16) de sorte que l'axe bogie (Z_{B}) et l'axe de pivotement vertical (Z_{A}) correspondants sont désaxés, le désaxage étant avantageusement identique au désaxage correspondant des véhicules semi-remorques (14).

6. Rame articulée (10) selon l'une quelconque des revendications 1 à 5, dans laquelle le véhicule principal (16) est un véhicule d'extrémité de la rame, avantageusement le véhicule de tête.

7. Rame articulée (10) selon l'une quelconque des revendications 1 à 6, dans laquelle le premier bogie (72) est dépourvu de système anti-roulis.

8. Rame articulée (10) selon l'une quelconque des revendications 1 à 7, dans laquelle les suspensions secondaires (100) du premier bogie (72) sont pneumatiquement reliées entre elles, le premier bogie (72) et le second bogie (74) définissant seulement trois points d'appui pour la caisse (70) du véhicule principal (16) lorsque les suspensions secondaires (100) du premier bogie (72) sont fonctionnelles.

## Patentansprüche

1. Gelenkzuggarnitur (10), umfassend:
a. ein Hauptfahrzeug (16), umfassend einen Wagenkasten (70), zwei Drehgestelle zum Tragen des Wagenkastens (70), die sogenannten Hauptdrehgestelle (72, 74), und ein Wagenkasten-Zwischengelenk (76), das von dem Wagenkasten (70) getragen wird, und
b. mindestens eine Kette (12) von Aufliegerfahrzeugen (14), die dazu bestimmt ist, an ein Hauptfahrzeug (16) angelenkt zu sein, jedes Aufliegerfahrzeug (14) umfassend einen Wagenkasten (20) und ein einziges den Wagenkasten (20) tragendes Drehgestell, das sogenannte Anhängerdrehgestell (22), wobei jedes Anhängerdrehgestell (22) in Bezug auf den entsprechenden Wagenkasten (20) um eine vertikale Schwenkachse, die sogenannte Drehgestellachse (Z_{B}), angelenkt ist, wobei eines der Endfahrzeuge der Kette (12), das sogenannte erste Aufliegerfahrzeug (14A), dazu bestimmt ist, an ein Hauptfahrzeug (16) angelenkt zu sein, wobei die Wagenkästen (20) der Aufliegerfahrzeuge (14) ausgehend von dem ersten Aufliegerfahrzeug (14A) der Kette (12) durch ein separates Wagenkasten-Zwischengelenk (50) nacheinander aneinander angelenkt sind, jedes Wagenkasten-Zwischengelenk (50) von einem Ende jedes Aufliegerfahrzeugs (14) getragen wird, das mit einem nachfolgenden Fahrzeug verbunden ist, wobei jedes Wagenkasten-Zwischengelenk (50) entlang einer vertikalen Schwenkachse (Z_{A}) angelenkt ist, jedes Anhängerdrehgestell (22) eines Wagenkastens (20), der ein Wagenkasten-Zwischengelenk (50) trägt, in Längsrichtung in Bezug auf den Wagenkasten (20) angeordnet ist, sodass die Drehgestellachse (Z_{B}) und die Verbindungsachse (Z_{A}) achsversetzt sind, wobei das erste Fahrzeug (14A) der Kette (12) an den Wagenkasten (70) des Hauptfahrzeugs (16) durch das Wagenkasten-Zwischengelenk (76) des Hauptfahrzeugs (16) angelenkt ist,
wobei die Gelenkzuggarnitur (10) **dadurch gekennzeichnet ist, dass** eines der Hauptdrehgestelle, das sogenannte erste Drehgestell (72), zwei sekundäre Aufhängungen (100) und eine einzige mittlere Notaufhängung (102) umfasst, das andere Hauptdrehgestell, das sogenannte zweite Drehgestell (74), zwei sekundäre Aufhängungen (89) und eine Notaufhängung (90), die jeder sekundären Aufhängung (89) eigen ist, umfasst, das erste Drehgestell (72) und das zweite Drehgestell (74) nur drei Stützpunkte für den Wagenkasten (70) des Hauptfahrzeugs (16) definieren, wenn die sekundären Aufhängungen (100) des ersten Drehgestells (72) nicht funktionsfähig sind.

2. Gelenkzuggarnitur (10) nach Anspruch 1, wobei die Drehgestellachse (Z_{B}) und die entsprechende Verbindungsachse (Z_{A}) um einen Abstand D versetzt sind, wobei der Abstand D kleiner als oder gleich wie die Hälfte des Abstands zwischen den Achsen des entsprechenden Drehgestells ist, vorzugsweise kleiner als oder gleich wie 1500 Millimeter, vorteilhafterweise kleiner als oder gleich wie 450 Millimeter.

3. Gelenkzuggarnitur (10) nach Anspruch 1 oder 2, wobei jedes Wagenkasten-Zwischengelenk (50) auch entlang einer horizontalen Schwenkachse (Y_{A}) angelenkt ist, wobei das Wagenkasten-Zwischengelenk (50) entlang der horizontalen Schwenkachse (Y_{A}) torsionsartig und entlang der vertikalen Schwenkachse (Z_{A}) konisch angelenkt ist.

4. Gelenkzuggarnitur (10) nach einem der Ansprüche 1 bis 3, wobei jedes Wagenkasten-Zwischengelenk ein Kugelgelenk mit Querachse ist, wie beispielsweise ein Kugelgelenk aus Gummi und Metall.

5. Gelenkzuggarnitur (10) nach einem der Ansprüche 1 bis 4, wobei jedes Hauptdrehgestell (72, 74) in Bezug auf den Wagenkasten (70) des Hauptfahrzeugs (16) um eine vertikale Schwenkachse, die sogenannte Drehgestellachse (Z_{B}), angelenkt ist, wobei das Wagenkasten-Zwischengelenk (76) des Hauptfahrzeugs (16) entlang einer vertikalen Schwenkachse (Z_{A}) angelenkt ist, wobei eines der Hauptdrehgestelle (74) in Bezug auf den Wagenkasten (70) des Hauptfahrzeugs (16) in Längsrichtung angeordnet ist, sodass die entsprechende Drehgestellachse (Z_{B}) und die vertikale Schwenkachse (Z_{A}) achsversetzt sind, wobei der Achsversatz vorteilhafterweise mit dem entsprechenden Achsversatz der Aufliegerfahrzeuge (14) identisch ist.

6. Gelenkzuggarnitur (10) nach einem der Ansprüche 1 bis 5, wobei das Hauptfahrzeug (16) ein Endfahrzeug der Zuggarnitur ist, vorteilhafterweise das Führungsfahrzeug.

7. Gelenkzuggarnitur (10) nach einem der Ansprüche 1 bis 6, wobei das erste Drehgestell (72) kein Anti-Roll-System aufweist.

8. Gelenkzuggarnitur (10) nach einem der Ansprüche 1 bis 7, wobei die sekundären Aufhängungen (100) des ersten Drehgestells (72) pneumatisch miteinander verbunden sind, das erste Drehgestell (72) und das zweite Drehgestell (74) nur drei Stützpunkte für den Wagenkasten (70) des Hauptfahrzeugs (16) definieren, wenn die sekundären Aufhängungen (100) des ersten Drehgestells (72) funktionsfähig sind.

## Claims

1. An articulated railway train (10) comprising:
a. a main vehicle (16) comprising a body (70), two bogies supporting the body (70), known as main bogies (72, 74), and an inter-body joint (76) carried by the body (70), and
b. at least one chain (12) of semi-trailer vehicles (14), intended to be articulated to a main vehicle (16), each semi-trailer vehicle (14) comprising a body (20) and a single bogie supporting the body (20), known as a trailer bogie (22), each trailer bogie (22) being articulated with respect to the corresponding body (20) along a vertical pivot axis, known as the bogie axis (Z_{B}), one of the end vehicles of the chain (12), known as the first semi-trailer vehicle (14A), being intended to be articulated to the main vehicle (16), the bodies (20) of the semi-trailer vehicles (14) being successively articulated to one another from the first semi-trailer vehicle (14A) of the chain (12) by a separate inter-body joint (50), each inter-body joint (50) being carried by one end of each semi-trailer vehicle (14) connected to a following vehicle, each inter-body joint (50) being articulated along a vertical pivot axis (Z_{A}), each trailer bogie (22) of a body (20) carrying an inter-body joint (50) being arranged longitudinally with respect to the body (20) so that the bogie axis (Z_{B}) and the interconnection axis (Z_{A}) are offset, the first vehicle (14A) of the chain (12) being articulated to the body (70) of the main vehicle (16) by the inter-body joint (76) of the main vehicle (16),
the articulated railway train (10) being **characterized in that** one of the main bogies, the so-called first bogie (72), comprises two secondary suspensions (100) and a single central back-up suspension (102), the other main bogie, the so-called second bogie (74), comprises two secondary suspensions (89) and a back-up suspension (90) specific to each secondary suspension (89), the first bogie (72) and the second bogie (74) defining only three support points for the body (70) of the main vehicle (16) when the secondary suspensions (100) of the first bogie (72) are malfunctioning.

2. The articulated railway train (10) according to claim 1, wherein the bogie axis (Z_{B}) and the corresponding interconnecting axis (Z_{A}) are offset by a distance D, the distance D being less than or equal to half the distance between the axles of the corresponding bogie, preferably less than or equal to 1500 mm, advantageously less than or equal to 450 mm.

3. The articulated railway train (10) according to claim 1 or 2, wherein each inter-body joint (50) is also articulated along a horizontal pivot axis (Y_{A}), the inter-body joint (50) being torsionally articulated along the horizontal pivot axis (Y_{A}) and conically articulated along the vertical pivot axis (Z_{A}).

4. The railway articulated train (10) according to any of claims 1 to 3, wherein each inter-body joint is a cross-axis ball joint, such as a rubber and metal ball joint.

5. The articulated train (10) according to any one of claims 1 to 4, in which each main bogie (72, 74) is articulated with respect to the body (70) of the main vehicle (16) according to a vertical pivot axis, known as the bogie axis (Z_{B}), the inter-body joint (76) of the main vehicle (16) being articulated according to a vertical pivot axis (Z_{A}), one of the main bogies (74) being arranged longitudinally with respect to the body (70) of the main vehicle (16) so that the corresponding bogie axis (Z_{B}) and the vertical pivot axis (Z_{A}) are offset, the offset being advantageously identical to the corresponding offset of the semi-trailers (14).

6. The articulated train (10) according to any one of claims 1 to 5, wherein the main vehicle (16) is an end vehicle of the train, advantageously the lead vehicle.

7. The articulated train (10) according to any of claims 1 to 6, wherein the first bogie (72) is devoid of an anti-roll system.

8. The articulated train (10) according to any one of claims 1 to 7, wherein the secondary suspensions (100) of the first bogie (72) are pneumatically connected to each other, the first bogie (72) and the second bogie (74) defining only three support points for the body (70) of the main vehicle (16) when the secondary suspensions (100) of the first bogie (72) are functional.
